Europäisches Patentamt

European Patent Office

Office européen des brevets

(19)

(11) Publication number: **0 266 441 B1**

# EUROPEAN PATENT SPECIFICATION

(12)

(45) Date of publication of the patent specification:
05.09.90

(51) Int. Cl.⁵: **B26D 7/30**

(21) Application number: 86115182.7

(22) Date of filing: 03.11.86

(54) Apparatus for cutting meat or fish.

(43) Date of publication of application:
11.05.88 Bulletin 88/19

(45) Publication of the grant of the patent:
05.09.90 Bulletin 90/36

(84) Designated Contracting States:
CH FR GB LI SE

(56) References cited:
DE-A- 3 106 185
DE-B- 2 644 024
GB-A- 2 149 650
US-A- 2 541 046
US-A- 2 799 043

(73) Proprietor: FRISCO-FINDUS AG, Industriestrasse,
CH-9400 Rorschach(CH)

(72) Inventor: Pegoraro, Giuliano, Irisgatan 22,
S-267 00 BJUV(SE)

ACTORUM AG

## Description

The present invention relates to an apparatus and a process for the automatic cutting of meat or fish to produce portions of a predetermined constant weight.

In the production of packaged frozen meat or fish products, it is important that the weight of the portions is controlled as accurately as possible, otherwise the weights will vary at the time of filling the packages resulting in certain disadvantages : underweight portions of incorrect weight have to be rejected leading to significant losses of fish or meat material while overweight portions have to be adjusted to the correct weight, which increases the costs.

The most reliable way of ensuring a constant weight is by cutting and weighing the portions manually. However, this is labour intensive and very time-consuming. Mechanical means for automatic and semi-automatic cutting and weighing of portions generally involve the use of very complex machinery. For example, the use of photoelectric sensors has been proposed to detect the linear measurements of fish but since not only the length, but also the breadth and thickness vary appreciably, this method would not lead to the cutting of portions with an accurate constant weight.

In our co-pending European Paten Application EP-A 0 235 322 falling under Article 54(3) of the EPC we have described and claimed an apparatus and process for the automatic cutting of meat or fish material to produce portions of a predetermined constant weight, comprising a pair of adjacent parallel conveyors suitable for transporting a meat or fish material lying partly on each conveyor, a weighing machine and a movable cutting device characterised in that the parallel conveyors are adapted to travel in the same direction at substantially the same speed and that at least part of one of the parallel conveyors is adapted to form the load-bearing platform of the weighing machine, the weighing machine being adapted to weigh the material on the load-bearing platform and the cutting device being adapted to move transversely relative to the direction of movement of the conveyors, the direction and distance of the transverse movement being controlled by the weight recorded on the weighing machine, and then to cut the material parallel to the direction of movement.

This method is very reliable provided that the thickness of the meat or fish material does not vary too much. However, when there are wide variations in the thickness of the meat or fish pieces, it is rather difficult to maintain a constant weight.

We have now developed an improvement to this apparatus and method which, surprisingly, enables fish and meat pieces having widely varying thicknesses to be cut automatically to a predetermined constant weight.

Accordingly the present invention provides an apparatus for the automatic cutting out of a portion from meat or fish material to produce portions of a predetermined constant weight, comprising a pair of adjacent parallel conveyors suitable for transporting the meat or fish material lying partly on each conveyor, two weighing machines, a control device and a movable cutting device wherein the parallel conveyors are adapted to travel in the same direction at substantially the same speed and each of the parallel conveyors is adapted to form the load-bearing platform of one weighing machine respectively, each weighing machine being adapted to weigh the material on the respective load-bearing platform so that the weight of the whole material as well as the portion required is measured, and the cutting device being positioned downstream of the adjacent parallel conveyors and adapted to move transversely relative to the direction of movement of the conveyors, the direction and distance of the transverse movement being controlled relative to the weights recorded on the weighing machines, by the control device, and then the material being cut parallel to the direction of movement of the conveyors.

The adjacent parallel conveyors are conveniently endless belts. Conveniently, each of these belts is fixed to the weighing machine via the axles of the rollers.

The adjacent parallel conveyors are preferably separated by a short distance so that there is a gap between them. The presence of this gap helps to eliminate the weight influence caused by any vertical or horizontal change of distance, or any speed difference between the two conveyors. The product has a natural elasticity and the elastic zone of the product in the gap between the two conveyors helps to eliminate this weight influence. Generally, the width of the gap may conveniently be from about 20 to 70 mm, more usually from 25 to 60 mm, preferably from 30 to 55 mm and especially from 35 to 51 mm. The optimum width of the gap depends a great deal on how precisely the mechanical construction of the weighing system has been effected and, clearly, a very precisely manufactured unit will be able to record a more accurate weight with a narrow gap than with a wide gap between the conveyors.

Advantageously, positioned upstream of the pair of adjacent parallel conveyors, there is an infeed conveyor, for example, an endless belt and, positioned between the pair of adjacent parallel conveyors and the cutting device, there may be an intermediate conveyor which may also be an endless belt.

The weighing machines are conveniently of the type consisting of continuously working scales based on load cells and are preferably spring balances. The measurements of the total weight and the partial weight of the portion required are recorded and fed to the control device, e.g. a computer, which is programmed by means of a factor to move the cutting device. The movement of the cutting device may be achieved by a motor which is actuated by the computer and which causes the cutting device to move in either direction transversely before stopping in the appropriate position to cut the meat or fish material at the correct point. Although any kind of cutting means may be used, for example, jet cutting, a circular saw is preferred.

A further conveyor is conveniently provided immediately after the cutting device to transport the cut material away.

The present invention also provides a process for the automatic cutting out of a portion from meat or fish material to produce portions of a predetermined constant weight which comprises placing the meat or fish material onto the infeed end of a pair of adjacent parallel conveyors travelling in the same direction substantially at the same speed so that the material lies partly on each conveyor, each conveyor being adapted to form the loadbearing platform of one weighing machine respectively each weighing machine being adapted to weigh the material on the respective load-bearing platform, so that the weight of the whole material as well as the weight of the portion required is measured during advancing of the material on the load-bearing platforms, which measurements are fed to a control device, after which the material is cut by a movable cutting device adapted to move transversely relative to the direction of movement of the conveyors, the direction and distance of the transverse movement being controlled relative to the weights recorded on the weighing machines by means of the control device.

The meat or fish material is conveniently placed manually on an infeed conveyor positioned upstream of the adjacent parallel conveyors. Advantageously, the desired approximate weight of that part of the material which will form the portion having a predetermined weight should lie substantially on one of the adjacent parallel conveyors, and this may conveniently be achieved by ensuring that the material contacts a fixed guide fitted in the appropriate position above the infeed conveyor.

After having been weighed the meat or fish material passes to an intermediate conveyor where it is collected before being cut.

The present invention is applicable to meat and fish materials of all sizes and shapes, and with widely varying thicknesses, for example cod or salmon. The invention is particularly suitable for cutting cod tails having a weight between about 100 g to 175 g.

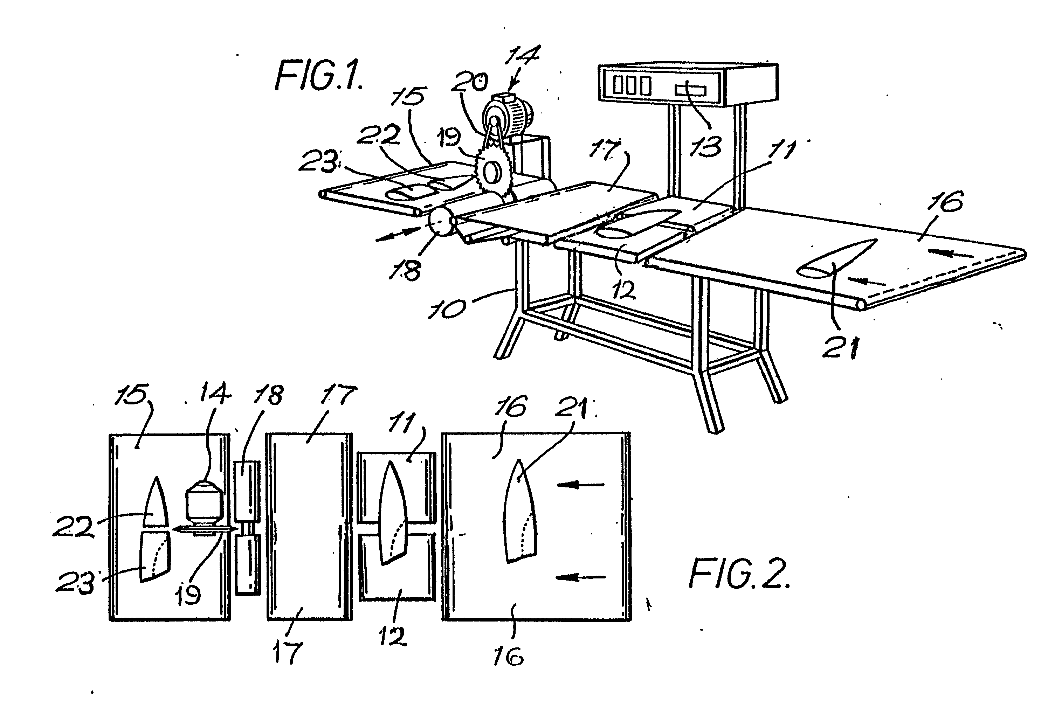

The present invention will now be illustrated by way of example with reference to the accompanying drawings in which Figure 1 represents a perspective view of the apparatus and Figure 2 represents a top plan view of the apparatus.

Referring to the drawings, the apparatus comprises a supporting frame 10, parallel endless belts 11 and 12 separated by a gap of 40 mm width, each of which forms the load bearing platform of a check weighing machine (not shown) computed with a computer, a weight recording unit 13, a movable cutting unit 14 and an endless belt 15. Upstream of endless belts 11, 12 is an infeed belt 16, and downstream of endless belts 11, 12 is an intermediate belt 17. The movable cutting unit comprises a roller 18 capable of moving back and forth in the direction of the arrow together with a circular saw 19 driven with a belt 20. The back and forth movement of the cutting unit is controlled by a step motor (not shown).

In operation, fillets of cod 21 are placed manually onto the infeed belt 16 in such a position that when a fillet reaches the parallel belts 11 and 12 at the infeed end approximately 120 g of the tail end lies on the belt 11. This is achieved by placing the fillet so that the end of the tail of each fillet touches a fixed guiding bar (not shown) fitted above the belt 16. The cod fillets 21 advance in the direction of the arrows and on reaching the belts 11 and 12 the weight of the whole fillet and the weight of the tail end is recorded. This information is fed to the computer which is programmed by means of a factor to actuate the step motor which causes the movable cutting unit 14 to travel the appropriate distance transversely to the direction of movement of the parallel belts 11 and 12 so that the cutter is in the correct position for cutting the cod fillets which, in the meantime have passed from belts 11, 12 to the intermediate belt 17 where they are collected while the cutting unit is travelling to the appropriate position. On traversing the roller 18 the cod fillets are cut to give tail portions 22 each weighing 120 g which are separated from the remaining cod fillet 23 whereupon the separated portions advance to the endless belt 15 where they are transported away for further processing.

**Claims**

1. An apparatus for the automatic cutting out of a portion (22) from meat or fish material (21) to produce portions (22) of a predetermined constant weight, comprising a pair of adjacent parallel conveyors (11, 12) suitable for transporting the meat or fish material (21) lying partly on each conveyor, two weighing machines, a control device and a movable cutting device (14) wherein the parallel conveyors (11, 12) are adapted to travel in the same direction at substantially the same speed and each of the parallel conveyors is adapted to form the loadbearing platform of one weighing machine respectively, each weighing machine being adapted to weigh the material on the respective load-bearing platform, so that the weight of the whole material (21) as well as the portion required (22) is measured, and the cutting device (14) being positioned downstream of the adjacent parallel conveyors (11, 12) and adapted to move transversely relative to the direction of movement of the conveyors (11, 12), the direction and distance of the transverse movement being controlled relative to the weights recorded on the weighing machines, by the control device, and then the material (21) being cut parallel to the direction of movement of the conveyors (11, 12).

2. An apparatus according to claim 1 characterised in that the adjacent parallel conveyors (11, 12) are separated by a short distance so that there is a gap between them.

3. An apparatus according to claim 2 characterised in that the width of the gap is from 30 to 55 mm.

4. An apparatus according to claim 1 characterised in that positioned upstream of the pair of adjacent parallel conveyors (11, 12) is an infeed conveyor (16).

5. An apparatus according to claim 1 characterised in that positioned between the pair of adjacent parallel conveyors (11, 12) and the cutting device is an intermediate conveyor (17).

6. An apparatus according to claim 1 characterised in that the cutting device (14) comprises a circular saw (19).

7. An apparatus according to claim 1 characterised in that the control device is a computer.

8. A process for the automatic cutting out of a portion (22) from meat or fish material (21) to produce portions (22) of a predetermined constant weight which comprises placing the meat or fish material (21) onto the infeed end of a pair of adjacent parallel conveyors (11, 12) travelling in the same direction substantially at the same speed so that the material lies partly on each conveyor, each conveyor being adapted to form the load-bearing platform of one weighing machine respectively each weighing machine being adapted to weigh the material on the respective load-bearing platform, so that the weight of the whole material (21) as well as the weight of the portion required (22) is measured during advancing of the material (21) on the load-bearing platforms (11, 12) which measurements are fed to a control device, after which the material (21) is cut by a movable cutting device (14) adapted to move transversely relative to the direction of movement of the conveyors, the direction and distance of the transverse movement being controlled relative to the weights recorded on the weighing machines by means of the control device.

9. A process according to claim 8 characterised in that the meat or fish material (21) is placed manually on an infeed conveyor (16) positioned upstream of the adjacent parallel conveyors (11, 12).

10. A process according to claim 9 characterised in that it is ensured that the material (21) contacts a fixed guide fitted in the appropriate position above the infeed conveyor (16) to ensure that the desired approximate weight of that part of the material which will form the portion having the predetermined weight (22) will lie substantially on one of the adjacent parallel conveyors (11).

**Revendications**

1. Appareil pour couper automatiquement une portion (22) de viande ou de poisson (21) afin de produire des portions (22) d'un poids constant prédéterminé, comprenant deux transporteurs parallèles adjacents (11, 12) aptes à transporter la viande ou le poisson (21) s'étendant en partie sur chaque transporteur, deux machines de pesage, un dispositif de commande et un dispositif mobile (14) de coupe, appareil dans lequel les transporteurs parallèles (11, 12) sont conçus pour se déplacer dans la même direction, sensiblement à la même vitesse, et chacun des transporteurs parallèles est conçu pour former la plateforme de charge d'une machine de pesage, respectivement, chaque machine de pesage étant conçue pour peser la matière sur la plate-forme de charge respective, afin que le poids de la totalité de la matière (21) ainsi que de la portion demandée (22) soit mesuré, le dispositif de coupe (14) étant placé en aval des transporteurs parallèles adjacents (11, 12) et étant conçu pour se déplacer transversalement à la direction du mouvement des transporteurs (11, 12), la direction et la distance du mouvement transversal étant commandées en fonction des poids enregistrés sur la machine de pesage, par le dispositif de commande, puis la matière (21) étant coupée parallèlement à la direction du mouvement des transporteurs (11, 12).

2. Appareil selon la revendication 1, caractérisé en ce que les transporteurs parallèles adjacents (11, 12) sont séparés par une courte distance afin qu'il existe un intervalle entre eux.

3. Appareil selon la revendication 2, caractérisé en ce que la largeur de l'intervalle est de 30 à 55 mm.

4. Appareil selon la revendication 1, caractérisé en ce qu'un transporteur (16) de chargement est placé en amont des deux transporteurs parallèles adjacents (11, 12).

5. Appareil selon la revendication 1, caractérisé en ce qu'un transporteur intermédiaire (17) est placé entre les deux transporteurs parallèles adjacents (11, 12) et le dispositif de coupe.

6. Appareil selon la revendication 1, caractérisé en ce que le dispositif de coupe (14) comprend une scie circulaire (19).

7. Appareil selon la revendication 1, caractérisé en ce que le dispositif de commande est un calculateur.

8. Procédé pour couper automatiquement une portion (22) dans de la viande ou du poisson (21) pour produire des portions (22) d'un poids constant prédéterminé, qui consiste à placer la viande ou le poisson (21) sur l'extrémité de chargement de deux transporteurs parallèles adjacents (11, 12) se déplaçant dans la même direction, sensiblement à la même vitesse, de manière que la matière s'étende en partie sur chaque transporteur, chaque transporteur étant conçu pour former une plateforme de charge d'une machine de pesage, respectivement, chaque machine de pesage étant conçue pour peser la matière sur la plate-forme de charge respective, de manière que le poids de la totalité de la matière (21) ainsi que le poids de la portion demandée (22), soient mesurés durant l'avance de la matière (21) sur les plates-formes de charge (11, 12), lesquelles mesures sont transmises à un dispositif de commande, après quoi la matière (21) est coupée par un dispositif de coupe (14) conçu pour se déplacer transversalement à la direction du mouvement des transporteurs, la direction et la distance du mouvement transversal étant commandées en fonction des poids enregistrés sur les machines de pesage au moyen du dispositif de commande.

9. Procédé selon la revendication 8, caractérisé en ce que la viande ou le poisson (21) est placé manuellement sur un transporteur (16) de chargement disposé en amont des transporteurs parallèles adjacents (11, 12).

10. Procédé selon la revendication 9, caractérisé en ce que l'on s'assure que la matière (21) entre en contact avec un guide fixe monté sur la position appropriée au-dessus du transporteur (16) de chargement pour assurer que le poids approximatif souhaité de la partie de la matière qui formera la portion ayant le poids prédéterminé (22) s'étende sensiblement sur l'un des transporteurs parallèles adjacents (11).

## Patentansprüche

1. Vorrichtung zum automatischen Abschneiden einer Portion (22) von einem Fleisch- oder Fischmaterial (21) zur Herstellung von Portionen (22) mit einem vorgegebenen konstanten Gewicht, mit einem Paar von benachbarten parallelen Förderern (11, 12), die für den Transport des Fleisch- oder Fischmaterials (21), das teilweise auf jedem der Förderer aufliegt, geeignet sind, zwei Wägemaschinen, einer Steuervorrichtung und einer beweglichen Schneidvorrichtung (14), worin die parallelen Förderer (11, 12) so ausgebildet sind, daß sie sich mit im wesentlichen der gleichen Geschwindigkeit in die gleiche Richtung bewegen und worin jeder der parallelen Förderer so ausgebildet ist, daß er die Wägebrücke einer der beiden Wägemaschinen bildet, wobei jede Wägemaschine so ausgebildet ist, daß sie das Gewicht des Materials auf der entsprechenden Wägebrücke abwägt, so daß das Gewicht des gesamten Materials (21), wie auch die erforderliche Portion (22) gemessen wird, und worin die Schneidvorrichtung (14) stromab von den benachbarten parallelen Förderern (11, 12) angeordnet ist und so ausgebildet ist, daß sie sich quer zur Bewegungsrichtung der Förderer (11, 12) bewegen kann, wobei die Richtung und der Weg der Querbewegung im Hinblick auf die von den Wägemaschinen aufgezeichneten Gewichte von der Steuervorrichtung gesteuert werden, und wobei dann das Material (21) parallel zur Bewegungsrichtung der Förderer (11, 12) geschnitten wird.

2. Vorrichtung nach Anspruch 1, dadurch gekennzeichnet, daß die benachbarten parallelen Förderer (11, 12) durch einen kurzen Abstand voneinander getrennt sind, so daß sich zwischen ihnen ein Spalt befindet.

3. Vorrichtung nach Anspruch 2, dadurch gekennzeichnet, daß die Breite des Spaltes von 30 bis 55 mm beträgt.

4. Vorrichtung nach Anspruch 1, dadurch gekennzeichnet, daß stromauf vor dem Paar der benachbarten parallelen Förderer (11, 12) ein Zuführförderer (16) angeordnet ist.

5. Vorrichtung nach Anspruch 1, dadurch gekennzeichnet, daß zwischen dem Paar der benachbarten parallelen Förderer (11, 12) und der Schneidvorrichtung ein Zwischenförderer (17) angeordnet ist.

6. Vorrichtung nach Anspruch 1, dadurch gekennzeichnet, daß die Schneidvorrichtung (14) eine Kreissäge (19) aufweist.

7. Vorrichtung nach Anspruch 1, dadurch gekennzeichnet, daß die Steuervorrichtung ein Computer ist.

8. Verfahren zum automatischen Abschneiden einer Portion (22) von einem Fleisch- oder Fischmaterial (21) zur Herstellung von Portionen (22) mit einem vorgegebenen konstanten Gewicht, das umfaßt das Aufgeben des Fleisch- oder Fischmaterials (21) auf das Zuführende eines Paares von benachbarten parallelen Förderern (11, 12), die sich im wesentlichen mit der gleichen Geschwindigkeit in die gleiche Richtung bewegen, so daß das Material teilweise auf jedem der Förderer aufliegt, wobei jeder der Förderer so ausgebildet ist, daß er die Wägebrücke einer Wägemaschine bildet, wobei jede dieser Wägemaschinen so ausgebildet ist, daß sie das Material auf der entsprechenden Wägebrücke abwägt, so daß das Gewicht des gesamten Materials (21) wie auch das Gewicht der erforderlichen Portion (22) gemessen werden, während sich das Material (21) auf den Wägebrücken (11, 12) vorwärtsbewegt, wobei die Meßergebnisse einer Steuervorrichtung zugeführt werden, wonach das Material (21) mit einer beweglichen Schneidvorrichtung (14) geschnitten wird, die so ausgebildet ist, daß sie sich quer zur Bewegungsrichtung der Förderer bewegt, wobei die Richtung und der Weg der Querbewegung im Hinblick auf die auf den Wägemaschinen aufgezeichneten Gewichte mit Hilfe der Steuervorrichtung gesteuert werden.

9. Verfahren nach Anspruch 8, dadurch gekennzeichnet, daß das Fleisch- oder Fischmaterial (21) von Hand auf einen Zuführförderer (16) aufgegeben wird, der stromauf vor den benachbarten parallelen Förderern (11, 12) angeordnet ist.

10. Verfahren nach Anspruch 9, dadurch gekennzeichnet, daß sichergestellt ist, daß das Material (21) eine feststehende Führung berührt, die in einer geeigneten Position über dem Zuführförderer (16) angeordnet ist, um sicherzustellen, daß das gewünschte annähernde Gewicht des Teils des Materials, das die Portion mit dem vorgegebenen Gewicht (22) bilden wird, im wesentlichen auf einem der benachbarten parallelen Förderer (11) aufliegt.

FIG.1.

FIG.2.

EP 0 266 441 B1